# EUROPEAN PATENT SPECIFICATION

(11) **EP 4 002 868 B1**
(45) Date of publication and mention of the grant of the patent: **25.12.2024**
(21) Application number: 19943702.1
(22) Date of filing: 28.08.2019
(51) Int. Cl.: H04R 19/02, H04R 1/06, B06B 1/02, G06F 3/044

(54) **ELECTROSTATIC TRANSDUCER AND METHOD FOR MANUFACTURING SAME**
ELEKTROSTATISCHER WANDLER UND VERFAHREN ZUR HERSTELLUNG DAVON
TRANSDUCTEUR ÉLECTROSTATIQUE ET PROCÉDÉ DE FABRICATION CORRESPONDANT

(43) Date of publication of application: 25.05.2022
(73) Proprietor: Sumitomo Riko Company Limited, Komaki-shi, Aichi 485-8550 (JP)
(72) Inventor: HASEGAWA, Koichi, Komaki-shi, Aichi 485-8550 (JP); TAHARA, Shinya, Komaki-shi, Aichi 485-8550 (JP); NAKANO, Katsuhiko, Komaki-shi, Aichi 485-8550 (JP)
(74) Representative: SSM Sandmair
(86) International application number: PCT/JP2019/033736
(87) International publication number: WO 2021/038761

(56) References cited:
- JP-A- 2009 021 549
- JP-A- 2016 039 091
- JP-A- 2019 102 913
- No further relevant documents disclosed

## Description

### Technical Field

The present disclosure relates to an electrostatic transducer and a method for manufacturing the same.

### Background Art

Japanese Patent No. 6511271 discloses that a core wire of a lead wire (also referred to as a conductive wire) is exposed such that the core wire is connected to an electrode pad on a substrate through ultrasonic bonding and the lead wire is fixed to the substrate by a fixing resin. Japanese Patent No. 6464321 discloses that an exposed core wire is connected to a connection land via a metal tube through ultrasonic bonding.

Japanese Patent No. 4844848 discloses that a core wire of a lead wire is connected to a terminal electrode through ultrasonic bonding without peeling off an insulation coating from a terminal end of the lead wire. Japanese Patent Laid-open No. 2009-21549 discloses that a spiral flat coil is formed on a surface of a thermoplastic film. The flat coil is formed to wind spirally in the substantially same direction and have the substantially same shape by fusing a lead wire (conductive wire) coated with a thermoplastic resin on the surface of the film.

JP 2019 102913 A discloses an electrostatic transducer according to the preamble of claim 1.

JP 2016 039091 A discloses that a battery includes: an electrode body including a positive electrode and a negative electrode; an outer packaging body which is formed of a laminate film including a metal material and a resin material and accommodates the electrode body; a pair of electrode terminals which are connected to the positive electrode and the negative electrode, respectively, and are led out to the outside of the outer packaging body; and a pair of lead wires which are connected to the pair of electrode terminals at the outside of the outer packaging body. This document further discloses that bonding potions between the electrode terminals and the lead wires are formed by bonding the electrode terminals with core wires of the lead wires (cf. Abstract

JP 2009 021549 A teaches that plane coils are each formed with a lead wire covered with thermoplastics, and are bonded on a surface and turned in the almost same direction as to have the almost same shape. As a result, plane coils are formed in an arbitrary shape, by an simple process.

### Summary of Invention

### Problem to be solved by the Invention

Regarding reliability of a connection state, it is important to inhibit the lead wire from pulling out and peeling off from an electrode sheet in an axial direction of the lead wire, in a state that a distal end of the lead wire is attached to the electrode sheet. In particular, when the electrode sheet is pliable, the lead wire is likely to pull out or peel off. Further, there is a demand for an easy and low-cost connection between the electrode sheet and the lead wire.

The disclosure provides an electrostatic transducer and a method for manufacturing the same in which a lead wire can be connected to a pliable electrode sheet reliably, easily, and at a low cost.

### Solution to Problem

### (1. Electrostatic Transducer)

The invention provides an electrostatic transducer according to claim 1.

The electrode sheet and the first coating portion are bonded to each other by self-fusion of the first bonding portion. According to the invention, the first bonding portion is a part of the first coating portion. In addition, it may configure a part of the electrode sheet or may configure another member other than the first coating portion and the electrode sheet. Even when the electrode sheet is pliable, the lead wire can be connected to the electrode sheet by the fusion of the first bonding portion reliably, easily, and at a low cost. As a result, the lead wire can be prevented from pulling out and peeling off from the electrode sheet in an axial direction of the lead wire.

### (2. Method for Manufacturing Electrostatic Transducer)

According to the present invention, there is provided a method for manufacturing an electrostatic transducer according to claim 14. Thus, the first bonding portion is formed by boning both the electrode sheet and the first coating portion through ultrasonic bonding. Consequently, the electrode sheet and the first coating portion can be easily and reliably bonded without an additional member for bonding.

### BRIEF DESCRIPTION OF THE DRAWINGS

FIG. 1 is a sectional view illustrating a basic configuration of a transducer.
FIG. 2 is a sectional view illustrating a transducer as a first example.
FIG. 3 is a plan view illustrating the transducer as the first example.
FIG. 4 is a sectional view illustrating a transducer as a second or third example.
FIG. 5 is a plan view illustrating the transducer as the second or third example.

### DESCRIPTION OF THE EMBODIMENTS

### (1. Application Target)

An electrostatic transducer (hereinafter, referred to as "transducer") includes, for example, a substrate and an electrostatic sheet attached to an attachment surface of the substrate. The substrate is an optional member and is formed of metal, resin, or other materials.

In addition, the attachment surface of the substrate may be formed into a three-dimensional shape such as a curved surface, a combined flat surface (shape formed of a plurality of flat surfaces), or a combined shape of a flat surface and a curved surface, or a front surface of the substrate may be formed into a single flat surface shape. When the substrate is formed of a material having flexibility, the electrostatic sheet can also be attached to the attachment surface of the substrate. In addition, the transducer can also use only the electrostatic sheet without including the substrate.

The electrostatic sheet is disposed at the attachment surface (front surface) of the substrate. The electrostatic sheet has pliability overall. The pliability means that the electrostatic sheet has flexibility and is extensible in a plane direction. Hence, even when the attachment surface of the substrate has a three-dimensional shape, the electrostatic sheet can be attached along the attachment surface of the substrate. In particular, the electrostatic sheet is attached to the attachment surface of the substrate while extending in the plane direction, and thereby wrinkles of the electrostatic sheet can be suppressed.

The electrostatic sheet can function as an actuator or a sensor by using a change in capacitance between a pair of electrodes. The electrostatic sheet may include at least one of a pair of electrodes and is not limited to a configuration which includes a pair of electrodes. It is evident that the electrostatic sheet may include a pair of electrodes.

The electrostatic sheet can function as an actuator that generates vibration, sound, or the like by using a change in capacitance between electrodes. In addition, the electrostatic sheet can function as a sensor that detects a pushing force from outside or a sensor that detects contact or approach of a conductor having a potential, by using a change in capacitance between electrodes.

When the electrostatic sheet functions as an actuator, a voltage is applied to electrodes, and thereby an insulator is deformed depending on a potential between the electrodes, and vibration is generated due to the deformation of the insulator. When the electrostatic sheet functions as a sensor that detects a pushing force, the insulator is deformed due to an input of a pushing force, vibration, sound, or the like from outside (hereinafter, referred to as pushing force or the like from outside), and thereby capacitance between electrodes changes. Here, the sensor detects a voltage based on the capacitance between the electrodes, thereby detecting the pushing force or the like from outside. In addition, when the electrostatic sheet functions as a sensor that detects contact or approach, contact or approach of a conductor having a potential causes a change in capacitance, and the sensor detects a voltage based on changed capacitance between the electrodes, thereby detecting contact or approach of the conductor.

The transducer is applicable to, for example, a surface of a mouse or a joystick which is a pointing device, a surface of a vehicle part, or the like. Examples of vehicle parts include an armrest, a doorknob, a shift lever, a steering wheel, a door trim, a center trim, a center console, a ceiling, or the like. In many cases, the substrate is formed of an inflexible material such as metal or a hard resin. Thus, the transducer can detect a state of a target subject or apply vibration or the like to a target subject.

In addition, the transducer may be disposed on a surface side of a seat surface or a surface side of a backrest surface. In this case, the transducer may be configured in a manner that an electrostatic sheet is attached to a substrate formed of a flexible material such as a resin film. In addition, the transducer may be configured of a single electrostatic sheet without a substrate.

In addition, the electrostatic sheet of the transducer can also be configured to function as a heater. In this case, the transducer can heat a target subject, in addition to detection of a state of a target subject, application of vibration or the like to the target subject.

### (2. Basic Configuration of Transducer 1)

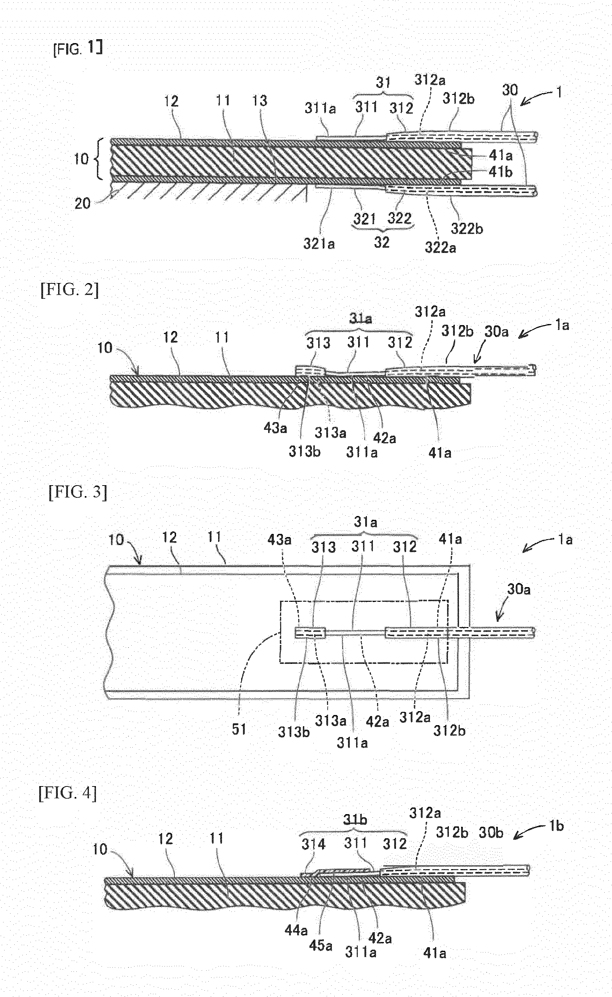

An example of a basic configuration of a transducer 1 is described with reference to FIG. 1. The transducer 1 includes at least an electrostatic sheet 10 and a lead wire 30. However, FIG. 1 illustrates an example of a case that the transducer 1 includes a substrate 20; however, the transducer 1 may have a configuration which does not include the substrate 20.

The substrate 20 may have any shape as described above. The substrate 20 is formed of any material such as metal or resin. In addition, the substrate 20 may or may not have flexibility.

The electrostatic sheet 10 includes at least an insulator sheet 11 and a front electrode sheet 12 (corresponding to the electrode sheet in the present disclosure). FIG. 1 illustrates an example of a case that the electrostatic sheet 10 further includes a backside electrode sheet 13. However, the electrostatic sheet 10 may also be configured without the backside electrode sheet 13. For example, when the substrate 20 configures an electrode, there is no need to include the backside electrode sheet 13.

The insulator sheet 11 is formed of elastomer for example. Hence, the insulator sheet 11 is pliable. In other words, the insulator sheet 11 has flexibility and is extensible in a plane direction. The insulator sheet 11 is formed of thermoplastic elastomer, for example. The insulator sheet 11 may be formed of thermoplastic elastomer itself or may be formed of elastomer crosslinked by heating the thermoplastic elastomer as a raw material.

Here, the insulator sheet 11 can be formed of one or more types of elastomer selected from styrene-based elastomer, olefin-based elastomer, vinyl chloride-based elastomer, urethane-based elastomer, ester-based elastomer, amide-based elastomer, and the like. Examples of styrene-based elastomer include SBS, SEBS, SEPS, and the like. Examples of olefin-based elastomer include copolymer of ethylene and α-olefin (ethylene-octene copolymer) and the like, as well as EEA, EMA, EMMA, and the like.

The insulator sheet 11 may contain rubber or resin other than the thermoplastic elastomer. For example, when the insulator sheet 11 contains rubber such as ethylene-propylene rubber (EPM and EPDM), pliability of the insulator sheet 11 is improved. From the viewpoint of improving the pliability of the insulator sheet 11, the insulator sheet 11 may contain a pliability imparting component such as a plasticizer.

The front electrode sheet 12 (corresponding to the electrode sheet in the present disclosure) is laminated on a front surface (upper surface in FIG. 1) side of the insulator sheet 11. In addition, the front electrode sheet 12 has conductivity. Further, the front electrode sheet 12 is pliable. In other words, the front electrode sheet 12 has flexibility and is extensible in a plane direction. The front electrode sheet 12 is formed of, for example, conductive elastomer, conductive fabric, a metal foil, or the like.

A case that the front electrode sheet 12 is formed of the conductive elastomer is described in detail. In this case, the front electrode sheet 12 is formed of elastomer containing conductive fillers. In other words, the front electrode sheet 12 is formed by taking elastomer as a base material and containing conductive fillers. The elastomer used for the front electrode sheet 12 may be made of a material having the same type of main component as that of the insulator sheet 11. In particular, the front electrode sheet 12 may be formed of thermoplastic elastomer.

That is, the front electrode sheet 12 can be formed of one or more types of elastomer selected from styrene-based elastomer, olefin-based elastomer, vinyl chloride-based elastomer, urethane-based elastomer, ester-based elastomer, amide-based elastomer, and the like. Examples of styrene-based elastomer include SBS, SEBS, SEPS, and the like. Examples of olefin-based elastomer include copolymer of ethylene and α-olefin (ethylene-octene copolymer) and the like, as well as EEA, EMA, EMMA, and the like.

However, the front electrode sheet 12 is made to have a higher softening point than that of the insulator sheet 11. The reason is to make the insulator sheet 11 be softened earlier than the front electrode sheet 12, when the front electrode sheet 12 is fixed to the insulator sheet 11 by self-fusion (thermal fusion) of the insulator sheet 11.

Here, the front electrode sheet 12 is fixed to the insulator sheet 11 by the self-fusion (thermal fusion) of the insulator sheet 11. Further, when the front electrode sheet 12 is formed of elastomer, the front electrode sheet 12 and the insulator sheet 11 are fixed to each other by self-fusion (thermal fusion) of the front electrode sheet 12. In other words, the front electrode sheet 12 and the insulator sheet 11 are fixed to each other by mutual fusion. Moreover, the front electrode sheet 12 and the insulator sheet 11 may be fixed to each other by fusion of only any one of the sheets.

In addition, a case that the front electrode sheet 12 is formed of conductive fabric is described in detail. The conductive fabric is woven fabric or nonwoven fabric formed of conductive fibers. Here, the conductive fiber is formed by coating a surface of a pliable fiber with a conductive material. For example, the conductive fiber is formed by plating a surface of a resin fiber such as polyethylene fiber with copper, nickel, or the like.

In this case, the front electrode sheet 12 is fixed to the insulator sheet 11 by the self-fusion (thermal fusion) of the insulator sheet 11. The front electrode sheet 12 is fabric and thus has a plurality of through-holes. Hence, a part of the insulator sheet 11 enters the through-holes of the front electrode sheet 12. In other words, at least a part of the front electrode sheet 12 is buried in the insulator sheet 11.

A case that the front electrode sheet 12 is formed of a metal foil is described in detail. Similarly to the conductive fabric, the metal foil has a plurality of through-holes. Hence, the front electrode sheet 12 has flexibility and is extensible in a plane direction along with deformation of the through-holes. The metal foil may be made of a conductive metal material, and copper foil, aluminum foil, or the like can be applied thereto, for example. Here, similarly to the case of the conductive fabric, the front electrode sheet 12 is fixed to the insulator sheet 11 by the self-fusion (thermal fusion) of the insulator sheet 11.

The backside electrode sheet 13 (opposite-surface electrode sheet) is laminated on a backside surface (lower surface in FIG. 1) of the insulator sheet 11, that is, a surface of the front electrode sheet 12 opposite to the insulator sheet 11. In other words, the backside electrode sheet 13 is disposed between the insulator sheet 11 and the substrate 20. The backside electrode sheet 13 is formed in the same manner as the front electrode sheet 12. In other words, the backside electrode sheet 13 is pliable and is formed of conductive elastomer, conductive fabric, a metal foil, or the like.

The transducer 1 includes the lead wire 30. The transducer 1 includes, as the lead wire 30, a front lead wire 31 for being electrically connected to the front electrode sheet 12 and a backside lead wire 32 for being electrically connected to the backside electrode sheet 13. However, in a configuration in which the transducer 1 does not include the backside electrode sheet 13, the transducer 1 is configured not to include the backside lead wire 32.

The front lead wire 31 is configured of a core wire (311a, 312a, or the like) and a coating material (312b or the like) which insulates and coats an outer circumferential surface of the core wire (311a, 312a, or the like). A part of the front lead wire 31 is disposed on the front electrode sheet 12. The front lead wire 31 has a conductive portion 311 and a first coating portion 312 in a range of the front lead wire 31 which is disposed on the front electrode sheet 12.

The conductive portion 311 is a portion at which the core wire 311a is exposed and which is electrically connected to the front electrode sheet 12. In other words, the core wire 311a in the conductive portion 311 is brought into contact with the front electrode sheet 12.

The first coating portion 312 has the core wire 312a and the first insulation material 312b which coats an outer circumferential surface of the core wire 312a. The first coating portion 312 is disposed on the front electrode sheet 12. In particular, the first coating portion 312 is located at a proximal end of the front lead wire 31 in the range of the front lead wire 31 which is disposed on the front electrode sheet 12. The proximal end is on a side from which the front lead wire 31 extends outside, in the range of the front lead wire 31 which is disposed on the front electrode sheet 12. Further, the first insulation material 312b is bonded to the front electrode sheet 12.

Specifically, the transducer 1 includes a bonding portion 41a (corresponding to a first bonding portion) which bonds the front electrode sheet 12 and the first coating portion 312. The bonding portion 41a is formed of a thermoplastic material and bonds the front electrode sheet 12 and the first coating portion 312 to each other by self-fusion (thermal fusion) of the bonding portion. The bonding portion 41a is configured of a part of the first insulation material 312b of the first coating portion 312. In addition, the bonding portion 41a may be configured of a part of thermoplastic elastomer of the front electrode sheet 12, when the front electrode sheet 12 is formed with the thermoplastic elastomer as a base material. In addition, the bonding portion 41a may be configured of a material different from the front electrode sheet 12 and the first coating portion 312.

The backside lead wire 32 has the same configuration as the front lead wire 31. At a conductive portion 321 of the backside lead wire 32, the core wire 321a is exposed, and the core wire 321a is brought into contact with the backside electrode sheet 13.

A first coating portion 322 of the backside lead wire 32 has a core wire 322a and a first insulation material 322b which coats an outer circumferential surface of the core wire 322a. The first coating portion 322 is disposed on the backside electrode sheet 13. In particular, the first coating portion 322 is located at a proximal end of the backside lead wire 32 in a range of the backside lead wire 32 which is disposed on the backside electrode sheet 13. Further, the first insulation material 322b is bonded to the backside electrode sheet 13.

Specifically, the transducer 1 includes a bonding portion 41b (corresponding to a first bonding portion) which bonds the backside electrode sheet 13 and the first coating portion 322. The bonding portion 41b has substantially the same configuration described above except for a difference between terms of front side and back side, and thus the detailed description thereof is omitted.

### (3. Effect of Basic Configuration of Transducer 1)

The front electrode sheet 12 and the first coating portion 312 of the front lead wire 31 are bonded to each other by self-fusion of the bonding portion 41a. Here, the bonding portion 41a may configure a part of the first coating portion 312 or a part of the front electrode sheet 12 or may configure another member other than the first coating portion 312 and the front electrode sheet 12. Even when the front electrode sheet 12 is pliable, the front lead wire 31 can be connected to the front electrode sheet 12 reliably, easily, and at a low cost by the fusion of the bonding portion 41a. As a result, the front lead wire 31 can be prevented from pulling out and peeling off from the front electrode sheet 12 in an axial direction of the front lead wire 31.

In addition, the backside electrode sheet 13 and the first coating portion 322 of the backside lead wire 32 are bonded to each other by self-fusion of the bonding portion 41b. Similarly to the front surface described above, at the backside surface, the backside lead wire 32 can be prevented from pulling out and peeling off from the backside electrode sheet 13 in the axial direction of the backside lead wire 32.

### (4. Examples of Transducer 1)

The transducer 1 including an additional element while including the basic configuration of the transducer 1 described above is described with a plurality of examples. Hereinafter, a bonding part between the front electrode sheet 12 and the front lead wire 31 is described. Moreover, bonding between the backside electrode sheet 13 and the backside lead wire 32 can be performed in the same configuration as that on the front side, and thus the description thereof is omitted.

### (4-1. Transducer 1a as First Example)

### (4-1a. Configuration of Transducer 1a as First Example)

A configuration of a transducer 1a as a first example is described with reference to FIGS 2 and 3. The transducer 1a includes at least an electrostatic sheet 10 and a lead wire 30a. In FIGS 2 and 3, the transducer 1a includes at least a front electrode sheet 12 as a part of the electrostatic sheet 10 and a front lead wire 31a as a part of the lead wire 30a. The front electrode sheet 12 is formed with thermoplastic elastomer as a base material and contains conductive fillers.

The front lead wire 31a has a conductive portion 311, a first coating portion 312, and a second coating portion 313. At the conductive portion 311, a core wire 311a is exposed. The core wire 311a of the conductive portion 311 and the front electrode sheet 12 are bonded to each other. In other words, the transducer 1a as the first example includes a bonding portion 42a that bonds the core wire 311a of the conductive portion 311 and the front electrode sheet 12 to each other.

The bonding portion 42a is configured of a part of the front electrode sheet 12 and becomes a part at which the front electrode sheet 12 and the core wire 311a of the conductive portion 311 are bonded to each other by self-fusion of the front electrode sheet 12. For example, the bonding portion 42a bonds the bonding targets through ultrasonic bonding. Further, the front electrode sheet 12 is formed of thermoplastic elastomer, and thus a part of the core wire 311a of the conductive portion 311 comes into a state of being buried in the front electrode sheet 12.

The first coating portion 312 has a core wire 312a and a first insulation material 312b which coats an outer circumferential surface of the core wire 312a. The first insulation material 312b of the first coating portion 312 and the front electrode sheet 12 are bonded to each other. In other words, the transducer 1a as the first example includes a bonding portion 41a (corresponding to a first bonding portion) which bonds the first insulation material 312b and the front electrode sheet 12 to each other. The first insulation material 312b is formed of a thermoplastic material (for example, thermoplastic resin).

A part of the bonding portion 41a is configured of a part of the first insulation material 312b and becomes a part at which the front electrode sheet 12 and the first insulation material 312b are bonded to each other by self-fusion of the first insulation material 312b. For example, the bonding portion 41a bonds the bonding targets by self-fusion of the first insulation material 312b through ultrasonic bonding.

Further, another part of the bonding portion 41a is configured of a part of the front electrode sheet 12 and becomes a part at which the front electrode sheet 12 and the first insulation material 312b are bonded to each other by self-fusion of the front electrode sheet 12. For example, the bonding portion 41a bonds the bonding targets by self-fusion of the front electrode sheet 12 through ultrasonic bonding.

The second coating portion 313 has a core wire 313a and a second insulation material 313b which coats an outer circumferential surface of the core wire 313a. The second coating portion 313 is located at a position different from the first coating portion 312 and is disposed on the front electrode sheet 12. In particular, the second coating portion 313 is located at a proximal end of the front lead wire 31a in a range of the front lead wire 31a which is disposed on the front electrode sheet 12. In other words, the conductive portion 311 is located between the first coating portion 312 and the second coating portion 313.

Further, the second insulation material 313b is bonded to the front electrode sheet 12. In other words, the transducer 1a as the first example includes a bonding portion 43a (corresponding to a second bonding portion) which bonds the second insulation material 313b and the front electrode sheet 12 to each other. The second insulation material 313b is formed of a thermoplastic material (for example, thermoplastic resin).

A part of the bonding portion 43a is configured of a part of the second insulation material 313b and becomes a part at which the front electrode sheet 12 and the second insulation material 313b are bonded to each other by self-fusion of the second insulation material 313b. For example, the bonding portion 43a bonds the bonding targets by self-fusion of the second insulation material 313b through ultrasonic bonding.

Further, another part of the bonding portion 43a is configured of a part of the front electrode sheet 12 and becomes a part at which the front electrode sheet 12 and the second insulation material 313b are bonded to each other by self-fusion of the front electrode sheet 12. For example, the bonding portion 43a bonds the bonding targets by self-fusion of the front electrode sheet 12 through ultrasonic bonding.

### (4-1b. Method for Manufacturing Transducer 1a as First Example)

A method for manufacturing the transducer 1a as the first example is described. Hereinafter, a method for manufacturing a part related to bonding of the front electrode sheet 12 and the front lead wire 31a is described.

First, the front lead wire 31a is prepared (S1). An insulation material at the distal end of the front lead wire 31a is peeled off and is moved in an axial direction thereof. However, in a state that a part of peeled insulation material is left, a redundant part of the insulation material is cut out. In this manner, the front lead wire 31a comes into a state of having the conductive portion 311, the first coating portion 312, and the second coating portion 313.

Subsequently, the conductive portion 311, the first coating portion 312, and the second coating portion 313 of the front lead wire 31a are disposed on the front electrode sheet 12 (S2). Subsequently, ultrasound is applied to a range 51 in FIG. 3, and thereby the core wire 311a of the conductive portion 311 and the front electrode sheet 12 are bonded to each other through ultrasonic bonding (S3). At the same time, the first insulation material 312b of the first coating portion 312 and the front electrode sheet 12 are bonded to each other through ultrasonic bonding (S3). Further, at the same time, the second insulation material 313b of the second coating portion 313 and the front electrode sheet 12 are bonded to each other through ultrasonic bonding (S3).

### (4-1c. Effect of Transducer 1a as First Example)

In the transducer 1a as the first example, the first coating portion 312 and the second coating portion 313 of the front lead wire 31a are bonded to the front electrode sheet 12. Hence, even when an axial-direction pulling-out force is applied to the front lead wire 31a from the front electrode sheet 12, the front lead wire 31a can be prevented from pulling out. In addition, the front electrode sheet 12 is pliable and thus comes into a state of being curved. In particular, when an attachment surface of the substrate 20 has a three-dimensional shape, there is a possibility that the front electrode sheet 12 will be bent when the electrostatic sheet 10 is attached to the substrate 20. At that time, even when a state in which a proximal end of the front lead wire 31a is bonded to the front electrode sheet 12 is maintained, there is a possibility that the distal end of the front lead wire 31a will be peel off from the front electrode sheet 12.

However, the first coating portion 312 at the proximal end is bonded to the front electrode sheet 12, and the second coating portion 313 at the distal end is bonded to the front electrode sheet 12 in the range of the front lead wire 31a which is disposed on the front electrode sheet 12. Hence, the distal end of the front lead wire 31a can be prevented from peeling off from the front electrode sheet 12.

Further, the bonding portion 41a or 43a is formed of a thermoplastic material and is fused to bond the bonding targets to each other. Hence, it is possible to easily and reliably bond the bonding targets. In particular, both the first insulation material 312b of the first coating portion 312 and the front electrode sheet 12 are formed of a thermoplastic material, and thereby the bonding targets are strongly bonded. Further, both the second insulation material 313b of the second coating portion 313 and the front electrode sheet 12 are formed of a thermoplastic material, and thereby the bonding targets are strongly bonded.

Further, the front electrode sheet 12 is formed with the thermoplastic elastomer as a base material, and thereby a part of the core wire 311a of the conductive portion 311 is buried in the front electrode sheet 12. Consequently, the core wire 311a of the conductive portion 311 is strongly secured to the front electrode sheet 12.

### (4-2. Transducer 1b as Second Example)

### (4-2a. Configuration of Transducer 1b as Second Example)

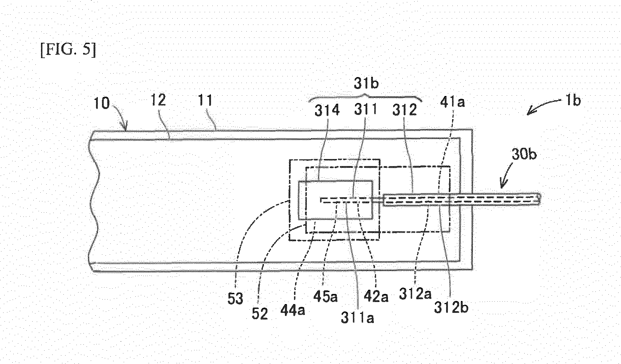

A configuration of a transducer 1b as a second example is described with reference to FIGS 4 and 5. The transducer 1b includes at least an electrostatic sheet 10 and a lead wire 30b. In FIGS 4 and 5, the transducer 1b includes at least a front electrode sheet 12 as a part of the electrostatic sheet 10 and a front lead wire 31b as a part of the lead wire 30b. The front electrode sheet 12 is formed with thermoplastic elastomer as a base material and contains conductive fillers.

The front lead wire 31b includes a conductive portion 311 and a first coating portion 312. In other words, the front lead wire 31b has the same configuration as that of the front lead wire 31 in the basic configuration of the transducer 1 described above.

At the conductive portion 311, a core wire 311a is exposed, and the core wire 311a and the front electrode sheet 12 are bonded to each other. In other words, the transducer 1b as the second example includes a bonding portion 42a that bonds the core wire 311a of the conductive portion 311 and the front electrode sheet 12 to each other. The bonding portion 42a has the same configuration as that of the bonding portion 42a in the transducer 1a as the first example.

The first coating portion 312 has a core wire 312a and a first insulation material 312b which coats an outer circumferential surface of the core wire 312a. The first insulation material 312b of the first coating portion 312 and the front electrode sheet 12 are bonded to each other. In other words, the transducer 1b as the second example includes a bonding portion 41a (corresponding to a first bonding portion) which bonds the first insulation material 312b and the front electrode sheet 12 to each other. The bonding portion 41a has the same configuration as that of the bonding portion 41a in the transducer 1a as the first example.

The transducer 1b as the second example further includes a reinforcing sheet 314 made of resin. The resin reinforcing sheet 314 is formed of a thermoplastic material, particularly, thermoplastic elastomer. For example, the reinforcing sheet 314 may be formed of the same type of material as that of the insulator sheet 11.

The reinforcing sheet 314 is formed to have a sufficient size to cover at least a distal end of the conductive portion 311 of the front lead wire 31b. The reinforcing sheet 314 is disposed to face the front electrode sheet 12, with at least the conductive portion 311 interposed between the front electrode sheet 12 and the reinforcing sheet 314. The reinforcing sheet 314 does not coat the first coating portion 312. However, the reinforcing sheet 314 may coat the first coating portion 312, but it is preferable not to coat the first coating portion 312 from the viewpoint of enabling the transducer 1b to have a thin thickness and the viewpoint of easy manufacturing.

Further, the reinforcing sheet 314 and the front electrode sheet 12 are bonded to each other. In other words, the transducer 1b as the second example includes a bonding portion 44a (corresponding to a third bonding portion) which bonds the reinforcing sheet 314 and the front electrode sheet 12 to each other.

A part of the bonding portion 44a is configured of a part of the reinforcing sheet 314 and becomes a part at which the front electrode sheet 12 and the reinforcing sheet 314 are bonded to each other by self-fusion of the reinforcing sheet 314. For example, the bonding portion 44a bonds the bonding targets by self-fusion of the reinforcing sheet 314 through ultrasonic bonding.

Further, another part of the bonding portion 44a is configured of a part of the front electrode sheet 12 and becomes a part at which the front electrode sheet 12 and the reinforcing sheet 314 are bonded to each other by self-fusion of the front electrode sheet 12. For example, the bonding portion 44a bonds the bonding targets by self-fusion of the front electrode sheet 12 through ultrasonic bonding.

In addition, the reinforcing sheet 314 and the core wire 311a of the conductive portion 311 are bonded to each other. In other words, the transducer 1b as the second example includes a bonding portion 45a that bonds the reinforcing sheet 314 and the core wire 311a of the conductive portion 311 to each other.

The bonding portion 45a is configured of a part of the reinforcing sheet 314 and becomes a part at which the core wire 311a of the conductive portion 311 and the reinforcing sheet 314 are bonded to each other by self-fusion of the reinforcing sheet 314. For example, the bonding portion 45a bonds the bonding targets by self-fusion of the reinforcing sheet 314 through ultrasonic bonding. Thus, a part of the core wire 311a of the conductive portion 311 is buried in the reinforcing sheet 314. Consequently, the core wire 311a of the conductive portion 311 is strongly secured to the reinforcing sheet 314.

### (4-2b. Method for Manufacturing Transducer 1b as Second Example)

A method for manufacturing the transducer 1b as the second example is described. Hereinafter, a method for manufacturing a part related to bonding of the front electrode sheet 12 and the front lead wire 31b is described.

First, the front lead wire 31b is prepared (S11). An insulation material at the distal end of the front lead wire 31b is peeled off. In this manner, the front lead wire 31b comes into a state of having the conductive portion 311 and the first coating portion 312. Subsequently, the conductive portion 311 and the first coating portion 312 of the front lead wire 31b are disposed on the front electrode sheet 12 (S12). Subsequently, ultrasound is applied to a range 52 in FIG. 5, and thereby the core wire 311a of the conductive portion 311 and the front electrode sheet 12 are bonded to each other through ultrasonic bonding (S13). At the same time, the first insulation material 312b of the first coating portion 312 and the front electrode sheet 12 are bonded to each other through ultrasonic bonding (S13).

Subsequently, the reinforcing sheet 314 is disposed to face the front electrode sheet 12, with the conductive portion 311 interposed between the front electrode sheet 12 and the reinforcing sheet 314 (S14). Subsequently, ultrasound is applied to a range 53 in FIG. 5, and thereby the reinforcing sheet 314 and the front electrode sheet 12 are bonded to each other through ultrasonic bonding (S15). At the same time, the reinforcing sheet 314 and the core wire 311a of the conductive portion 311 are bonded to each other through ultrasonic bonding (S15).

### (4-2c. Effect of Transducer 1b as Second Example)

The transducer 1b as the second example has an effect from the bonding of the first coating portion 312 of the front lead wire 31b to the front electrode sheet 12. The transducer 1b further includes the reinforcing sheet 314. The reinforcing sheet 314 is bonded to the front electrode sheet 12 with the core wire 311a of the conductive portion 311 of the front lead wire 31b interposed therebetween. Consequently, the front lead wire 31b can be prevented from pulling out from the front electrode sheet 12 in the axial direction. Further, the distal end of the front lead wire 31b can be prevented from peeling off from the front electrode sheet 12. Further, the reinforcing sheet 314 is bonded to the core wire 311a of the conductive portion 311. Consequently, the front lead wire 31b can be prevented from pulling out and prevented from peeling off.

In addition, the reinforcing sheet 314 is formed of a thermoplastic material and is fused to bond the bonding targets to each other. Hence, it is possible to easily and reliably bond the bonding targets. In particular, both the reinforcing sheet 314 and the front electrode sheet 12 are formed of a thermoplastic material, and thereby the bonding targets are strongly bonded.

Further, the front electrode sheet 12 is formed with thermoplastic elastomer as a base material, and the reinforcing sheet 314 is formed of thermoplastic elastomer. Consequently, a part of the core wire 311a of the conductive portion 311 is buried in both the front electrode sheet 12 and the reinforcing sheet 314. Consequently, the core wire 311a of the conductive portion 311 is strongly secured to the front electrode sheet 12 and the reinforcing sheet 314.

Further, the reinforcing sheet 314 is formed of thermoplastic elastomer, and thereby pliability of a bonding part of the front lead wire 31b can be maintained. Hence, the transducer 1 has good handleability.

Further, the reinforcing sheet 314 presses the core wire 311a of the conductive portion 311 toward the front electrode sheet 12 side. Hence, a pressing force from the reinforcing sheet 314 can reliably secure a conduction state between the core wire 311a of the conductive portion 311 and the front electrode sheet 12.

### (4-3. Transducer 1b as Third Example)

### (4-3a. Configuration of Transducer 1b as Third Example)

A configuration of a transducer 1b as a third example is described with reference to FIGS 4 and 5. The transducer 1b as the third example has the same configuration as that of the transducer 1b as the second example, except for a difference in material of the front electrode sheet 12 and the reinforcing sheet 314.

The front electrode sheet 12 is formed of a metal sheet. For example, the front electrode sheet 12 is formed of conductive fabric. In addition, the transducer 1b as the third example includes a reinforcing sheet 314 made of metal, instead of the reinforcing sheet 314 made of resin. The reinforcing sheet 314 made of metal at least has a front surface made of a metal material. For example, the reinforcing sheet 314 is formed of conductive fabric, a metal foil having through-holes, or the like.

The reinforcing sheet 314 is formed to have a sufficient size to cover at least a distal end of the conductive portion 311 of the front lead wire 31b. The reinforcing sheet 314 is disposed to face the front electrode sheet 12, with the conductive portion 311 interposed between the front electrode sheet 12 and the reinforcing sheet 314. Here, the reinforcing sheet 314 does not coat the first coating portion 312, from the viewpoint of enabling the transducer 1b to have a thin thickness and the viewpoint of easy manufacturing. Further, a bonding force between the metal and the resin is lower than a bonding force between two pieces of metal, and thus the reinforcing sheet 314 does not coat the first coating portion 312.

Further, the reinforcing sheet 314 and the front electrode sheet 12 are bonded to each other by metal through ultrasonic bonding. In other words, the transducer 1b as the third example includes a bonding portion 44a (corresponding to a fourth bonding portion) which performs metal bonding between the reinforcing sheet 314 and the front electrode sheet 12. In other words, the bonding portion 44a configures a metal bonding part.

Further, the reinforcing sheet 314 and the core wire 311a of the conductive portion 311 are bonded by metal through ultrasonic bonding. In other words, the transducer 1b as the third example includes a bonding portion 45a that performs metal bonding between the reinforcing sheet 314 and the core wire 311a of the conductive portion 311. In other words, the bonding portion 45a configures a metal bonding part.

### (4-3b. Method for Manufacturing Transducer 1b as Third Example)

A method for manufacturing the transducer 1b as the third example is described. Hereinafter, a method for manufacturing a part related to bonding of the front electrode sheet 12 and the front lead wire 31b is described.

First, the front lead wire 31b is prepared (S21). Subsequently, the conductive portion 311 and the first coating portion 312 of the front lead wire 31b are disposed on the front electrode sheet 12 (S22). Subsequently, ultrasound is applied to a range 52 in FIG. 5, and thereby the core wire 311a of the conductive portion 311 and the front electrode sheet 12 are bonded to each other through ultrasonic bonding (S23). At the same time, the first insulation material 312b of the first coating portion 312 and the front electrode sheet 12 are bonded to each other through ultrasonic bonding (S23).

Subsequently, the reinforcing sheet 314 is disposed to face the front electrode sheet 12, with the conductive portion 311 interposed between the front electrode sheet 12 and the reinforcing sheet 314 (S24). Subsequently, ultrasound is applied to a range 53 in FIG. 5, and thereby metal bonding between the reinforcing sheet 314 and the front electrode sheet 12 is performed through ultrasonic bonding (S25). At the same time, metal bonding between the reinforcing sheet 314 and the core wire 311a of the conductive portion 311 is performed through ultrasonic bonding (S25).

### (4-3c. Effect of Transducer 1b as Third Example)

In the transducer 1b as the third example, bonding targets are strongly bonded to each other by metal bonding between the front electrode sheet 12 and the reinforcing sheet 314. Further, boning targets are strongly bonded to each other by metal bonding between the reinforcing sheet 314 and the core wire 311a of the conductive portion 311. Consequently, the front lead wire 31b can be prevented from pulling out in the axial direction and prevented from peeing off.

Further, the reinforcing sheet 314 is bonded to the front electrode sheet 12 by metal and is bonded to the core wire 311a of the conductive portion 311 by metal. Hence, conduction between the core wire 311a of the conductive portion 311 and the front electrode sheet 12 is performed by conduction via the reinforcing sheet 314, in addition to direct conduction between the core wire 311a and the front electrode sheet 12. Hence, a conduction state between the core wire 311a of the conductive portion 311 and the front electrode sheet 12 can be reliably secured.

### (4-4. Other Examples)

The transducer 1 may have a configuration obtained by combining the first example and the second example. In addition, the transducer 1 may have a configuration obtained by combining the first example and the third example. In these cases, the front lead wire 31 has the second coating portion 313 in the first example, and the transducer 1 has the reinforcing sheet 314 in the second example.

### Reference Signs List

1, 1a, 1b: electrostatic transducer, 10: electrostatic sheet, 11: electrostatic sheet, 12: front electrode sheet, 13: backside electrode sheet, 20: substrate, 30, 30a, 30b: lead wire 31, 31a, 31b: front lead wire, 311: conductive portion, 311a: core wire, 312: first coating portion 312a: core wire, 312b: first insulation material, 313: second coating portion, 313a: core wire, 313b: second insulation material, 314: reinforcing sheet, 32: backside lead wire, 321: conductive portion, 321a: core wire, 322: first coating portion, 322a: core wire, 322b: first insulation material, 41a: bonding portion (first bonding portion), 41b: bonding portion, 42a: bonding portion, 43a: bonding portion (second bonding portion), 44a: bonding portion (third bonding portion, fourth bonding portion), 45a: bonding portion, 51, 52, 53: ultrasound application range

## Claims

1. An electrostatic transducer comprising:
an electrode sheet (12) that is pliable;
a lead wire (31) that includes a conductive portion (311), wherein the conductive portion has a core wire (311a) exposed, and wherein the conductive portion is disposed on and electrically connected to the electrode sheet (12), and the lead wire (31) includes a first coating portion (312) at which the core wire (312a) is coated with a first insulation material (312b) and wherein the first coating portion is disposed on the electrode sheet (12); and
a first bonding portion (41a) that is formed of a thermoplastic material and is fused to bond the electrode sheet (12) and the first coating portion (312) to each other,
**characterized in that**
the first insulation material (312b) is formed of a thermoplastic material, and
the first bonding portion (41a) is configured of a part of the first insulation material (312b).

2. The electrostatic transducer according to claim 1,
wherein the electrode sheet (12) is formed of thermoplastic elastomer, and
wherein the first bonding portion (41a) is configured of a part of the thermoplastic elastomer of the electrode sheet (12).

3. The electrostatic transducer according to claim 1 or 2,
wherein the first bonding portion (41a) bonds the electrode sheet (12) and the first coating portion (41a) to each other through ultrasonic bonding.

4. The electrostatic transducer according to any one of claims 1 to 3,
wherein the lead wire (31a) further includes a second coating portion (313) which is located at a position different from the first coating portion (312), at which a core wire is coated with a second insulation material (313b), and which is disposed on the electrode sheet (12), and
wherein the electrostatic transducer further comprises a second bonding portion (43a) that is formed of a thermoplastic material and is fused to bond the electrode sheet (12) and the second coating portion (313) to each other.

5. The electrostatic transducer according to claim 4,
wherein the first coating portion (41a) is located at a proximal end of the lead wire (30a) which is on a side from which the lead wire (30a) extends outside, the proximal end being a portion in a range of the lead wire (30a) which is disposed on the electrode sheet (12),
wherein the second coating portion (313) is located at a distal end of the lead wire (30a), and
wherein the conductive portion (311) is located between the first coating portion (41a) and the second coating portion (313).

6. The electrostatic transducer according to claim 4 or 5,
wherein the second insulation material (313b) is formed of a thermoplastic material, and
wherein the second bonding portion (43a) is configured of a part of the second insulation material (313b).

7. The electrostatic transducer according to any one of claims 4 to 6,
wherein the electrode sheet (12) is formed of thermoplastic elastomer, and
wherein the second bonding portion (43a) is configured of a part of the thermoplastic elastomer of the electrode sheet (12).

8. The electrostatic transducer according to any one of claims 4 to 6,
wherein the second bonding portion (43a) bonds the electrode sheet (12) and the second coating portion (313) to each other through ultrasonic bonding.

9. The electrostatic transducer according to any one of claims 1 to 8, further comprising:
a reinforcing sheet (314) made of resin that is formed of a thermoplastic material and is disposed to face the electrode sheet (12), with at least the conductive portion (311) interposed between the electrode sheet (12) and the reinforcing sheet (314); and
a third bonding portion (44a) that is configured of a part of the reinforcing sheet (314) and is fused to bond the electrode sheet (12) and the reinforcing sheet (314) to each other.

10. The electrostatic transducer according to claim 9,
wherein the third bonding portion (44a) bonds the electrode sheet (12) and the reinforcing sheet (314) to each other through ultrasonic bonding.

11. The electrostatic transducer according to any one of claims 1 to 8, further comprising:
a reinforcing sheet (314) made of metal that at least has a front surface formed of a metal material and is disposed to face the electrode sheet (12), with at least the conductive portion (311) interposed between the electrode sheet (12) and the reinforcing sheet (314); and
a fourth bonding portion (44a) that bonds the electrode sheet (12) and the reinforcing sheet (314) to each other through ultrasonic bonding.

12. The electrostatic transducer according to claim 11,
wherein the fourth bonding portion (44a) bonds the electrode sheet (12) and the reinforcing sheet (314) to each other through ultrasonic bonding and bonds the core wire of the conductive portion (311) and the reinforcing sheet (314) to each other through ultrasonic bonding.

13. The electrostatic transducer according to claim 11 or 12,
wherein the reinforcing sheet (314) is conductive fabric.

14. A method for manufacturing an electrostatic transducer, which manufactures the electrostatic transducer according to claim 3 and comprises:
disposing the conductive portion (311) and the first coating portion (312) on the electrode sheet (12);
bonding the electrode sheet (12) and the first coating portion (312) to each other through ultrasonic bonding;
disposing the conductive portion (311) and the first coating portion (312) on the electrode sheet (12); and
bonding the electrode sheet (12) and the core wire (311a) of the conductive portion (311) to each other through ultrasonic bonding, and bonding the electrode sheet (12) and the first coating portion (312) to each other through ultrasonic bonding.

## Patentansprüche

1. Elektrostatischer Wandler mit:
einer Elektrodenfolie (12), die biegsam ist;
einem Anschlussdraht (31), der einen leitenden Abschnitt (311) umfasst, wobei der leitende Abschnitt einen freiliegenden Kerndraht (311a) aufweist und wobei der leitende Abschnitt auf der Elektrodenfolie (12) angeordnet und elektrisch mit dieser verbunden ist, und der Anschlussdraht (31) einen ersten Beschichtungsabschnitt (312) aufweist, an dem der Kerndraht (312a) mit einem ersten Isoliermaterial (312b) beschichtet ist und wobei der erste Beschichtungsabschnitt auf der Elektrodenfolie (12) angeordnet ist; und
einem ersten Verbindungsabschnitt (41a), der aus einem thermoplastischen Material gebildet ist und verschmolzen ist, um die Elektrodenfolie (12) und den ersten Beschichtungsabschnitt (312) miteinander zu verbinden,
**dadurch gekennzeichnet, dass**
das erste Isoliermaterial (312b) aus einem thermoplastischen Material besteht, und
der erste Verbindungsabschnitt (41a) aus einem Teil des ersten Isoliermaterials (312b) besteht.

2. Elektrostatischer Wandler nach Anspruch 1,
wobei die Elektrodenfolie (12) aus thermoplastischem Elastomer besteht, und
wobei der erste Verbindungsabschnitt (41a) aus einem Teil des thermoplastischen Elastomers der Elektrodenfolie (12) besteht.

3. Elektrostatischer Wandler nach Anspruch 1 oder 2,
wobei der erste Verbindungsabschnitt (41a) die Elektrodenfolie (12) und den ersten Beschichtungsabschnitt (312) durch Ultraschallbonding miteinander verbindet.

4. Elektrostatischer Wandler nach einem der Ansprüche 1 bis 3,
wobei der Anschlussdraht (31a) ferner einen zweiten Beschichtungsabschnitt (313) umfasst, der sich an einer anderen Position als der erste Beschichtungsabschnitt (312) befindet, an der ein Kerndraht mit einem zweiten Isoliermaterial (313b) beschichtet ist, und der auf der Elektrodenfolie (12) angeordnet ist, und
wobei der elektrostatische Wandler außerdem einen zweiten Verbindungsabschnitt (43a) umfasst, der aus einem thermoplastischen Material gebildet ist und verschmolzen ist, um die Elektrodenfolie (12) und den zweiten Beschichtungsabschnitt (313) miteinander zu verbinden.

5. Elektrostatischer Wandler nach Anspruch 4,
wobei sich der erste Beschichtungsabschnitt (41a) an einem proximalen Ende des Anschlussdrahts (30a) befindet, das sich auf einer Seite befindet, von der aus der Anschlussdraht (30a) nach außen verläuft, wobei das proximale Ende ein Abschnitt in einem Bereich des Anschlussdrahts (30a) ist, der auf der Elektrodenfolie (12) angeordnet ist,
wobei sich der zweite Beschichtungsabschnitt (313) an einem distalen Ende des Anschlussdrahtes (30a) befindet, und
wobei sich der leitfähige Abschnitt (311) zwischen dem ersten Beschichtungsabschnitt (41a) und dem zweiten Beschichtungsabschnitt (313) befindet.

6. Elektrostatischer Wandler nach Anspruch 4 oder 5,
wobei das zweite Isoliermaterial (313b) aus einem thermoplastischen Material gebildet ist, und
wobei der zweite Verbindungsabschnitt (43a) aus einem Teil des zweiten Isoliermaterials (313b) besteht.

7. Elektrostatischer Wandler nach einem der Ansprüche 4 bis 6,
wobei die Elektrodenfolie (12) aus thermoplastischem Elastomer besteht, und
wobei der zweite Verbindungsabschnitt (43a) aus einem Teil des thermoplastischen Elastomers der Elektrodenfolie (12) besteht.

8. Elektrostatischer Wandler nach einem der Ansprüche 4 bis 6,
wobei der zweite Verbindungsabschnitt (43a) die Elektrodenfolie (12) und den zweiten Beschichtungsabschnitt (313) durch Ultraschallverbindung miteinander verbindet.

9. Elektrostatischer Wandler nach einem der Ansprüche 1 bis 8, der ferner umfasst:
eine Verstärkungsfolie (314) aus Harz, das aus einem thermoplastischen Material gebildet ist und so angeordnet ist, dass es der Elektrodenfolie (12) zugewandt ist, wobei zumindest der leitfähige Abschnitt (311) zwischen der Elektrodenfolie (12) und der Verstärkungsfolie (314) angeordnet ist; und
einen dritten Verbindungsabschnitt (44a), der aus einem Teil der Verstärkungsfolie (314) besteht und verschmolzen ist, um die Elektrodenfolie (12) und die Verstärkungsfolie (314) miteinander zu verbinden.

10. Elektrostatischer Wandler nach Anspruch 9,
wobei der dritte Verbindungsabschnitt (44a) die Elektrodenfolie (12) und die Verstärkungsfolie (314) durch Ultraschallbinden miteinander verbindet.

11. Elektrostatischer Wandler nach einem der Ansprüche 1 bis 8, der ferner umfasst:
eine Verstärkungsfolie (314) aus Metall, die zumindest eine aus einem metallischen Material geformte Vorderseite aufweist und so angeordnet ist, dass es der Elektrodenfolie (12) zugewandt ist, wobei zumindest der leitfähige Abschnitt (311) zwischen der Elektrodenfolie (12) und der Verstärkungsfolie (314) angeordnet ist; und
einen vierten Verbindungsabschnitt (44a), der die Elektrodenfolie (12) und die Verstärkungsfolie (314) durch Ultraschallbonding miteinander verbindet.

12. Elektrostatischer Wandler nach Anspruch 11,
wobei der vierte Verbindungsabschnitt (44a) die Elektrodenfolie (12) und die Verstärkungsfolie (314) durch Ultraschallbonding miteinander verbindet und den Kerndraht des leitfähigen Abschnitts (311) und die Verstärkungsfolie (314) durch Ultraschallbonding miteinander verbindet.

13. Elektrostatischer Wandler nach Anspruch 11 oder 12,
wobei die Verstärkungsfolie (314) ein leitfähiges Gewebe ist.

14. Verfahren zur Herstellung eines elektrostatischen Wandlers, das den elektrostatischen Wandler gemäß Anspruch 3 herstellt und umfasst:
Anordnen des leitfähigen Abschnitts (311) und des ersten Beschichtungsabschnitts (312) auf dem Elektrodenfolie (12);
Miteinander-Verbinden der Elektrodenfolie (12) und des ersten Beschichtungsabschnitts (312) durch Ultraschallbonding ;
Anordnen des leitfähigen Abschnitts (311) und des ersten Beschichtungsabschnitts (312) auf der Elektrodenfolie (12); und
Miteinander-Verbinden der Elektrodenfolie (12) und des Kerndrahts des leitfähigen Abschnitts (311) durch Ultraschallbonding, und Miteinander-Verbinden der Elektrodenfolie (12) und des ersten Beschichtungsabschnitts (312) durch Ultraschallbonding.

## Revendications

1. Transducteur électrostatique comprenant :
une feuille d'électrode (12) qui est pliable ;
un fil de connexion (31) qui inclut une portion conductrice (311), dans lequel la portion conductrice a un fil central (311a) exposé, et dans lequel la portion conductrice est disposée sur et connectée électriquement à la feuille d'électrode (12), et le fil conducteur (31) inclut une première portion de revêtement (312) au niveau de laquelle le fil central (312a) est revêtu d'un premier matériau isolant (312b) et dans lequel la première portion de revêtement est disposée sur la feuille d'électrode (12) ; et
une première portion de liaison (41a) qui est formée d'un matériau thermoplastique et fusionnée pour lier la feuille d'électrode (12) et la première portion de revêtement (312) l'une à l'autre,
**caractérisé en ce que**
le premier matériau isolant (312b) est formé d'un matériau thermoplastique, et
la première portion de liaison (41a) est configurée d'une partie du premier matériau isolant (312b).

2. Transducteur électrostatique selon la revendication 1,
dans lequel la feuille d'électrode (12) est formée d'un élastomère thermoplastique, et
dans lequel la première portion de liaison (41a) est configurée d'une partie de l'élastomère thermoplastique de la feuille d'électrode (12).

3. Transducteur électrostatique selon la revendication 1 ou 2,
dans lequel la première portion de liaison (41a) lie la feuille d'électrode (12) et la première portion de revêtement (41a) l'une à l'autre par liaison par ultrasons.

4. Transducteur électrostatique selon l'une quelconque des revendications 1 à 3,
dans lequel le fil de connexion (31a) inclut en outre une deuxième portion de revêtement (313) qui est située à une position différente de la première portion de revêtement (312), au niveau de laquelle un fil central est revêtu d'un deuxième matériau isolant (313b), et qui est disposée sur la feuille d'électrode (12), et
dans lequel le transducteur électrostatique comprend en outre une deuxième portion de liaison (43a) qui est formée d'un matériau thermoplastique et fusionnée pour lier la feuille d'électrode (12) et la deuxième portion de revêtement (313) l'une à l'autre.

5. Transducteur électrostatique selon la revendication 4,
dans lequel la première portion de revêtement (41a) est située à une extrémité proximale du fil de connexion (30a) qui est sur un côté à partir duquel le fil de connexion (30a) s'étend à l'extérieur, l'extrémité proximale étant une portion dans une plage du fil de connexion (30a) qui est disposée sur la feuille d'électrode (12),
dans lequel la deuxième portion de revêtement (313) est située à une extrémité distale du fil de connexion (30a), et
la portion conductrice (311) est située entre la première portion de revêtement (41a) et la deuxième portion de revêtement (313).

6. Transducteur électrostatique selon la revendication 4 ou 5,
dans lequel le deuxième matériau isolant (313b) est formé d'un matériau thermoplastique,
dans lequel la deuxième portion de liaison (43a) est configurée d'une partie du deuxième matériau isolant (313b).

7. Transducteur électrostatique selon l'une quelconque des revendications 4 à 6,
dans lequel la feuille d'électrode (12) est formée d'un élastomère thermoplastique, et
dans lequel la deuxième portion de liaison (43a) est configurée d'une partie de l'élastomère thermoplastique de la feuille d'électrode (12).

8. Transducteur électrostatique selon l'une quelconque des revendications 4 à 6,
dans lequel la deuxième portion de liaison (43a) lie la feuille d'électrode (12) et la deuxième portion de revêtement (313) l'une à l'autre par liaison par ultrasons.

9. Transducteur électrostatique selon l'une quelconque des revendications 1 à 8, comprenant en outre :
une feuille de renforcement (314) faite de résine qui est formée d'un matériau thermoplastique et est disposée pour faire face à la feuille d'électrode (12), avec au moins la portion conductrice (311) interposée entre la feuille d'électrode (12) et la feuille de renforcement (314) ; et
une troisième portion de liaison (44a) qui est configurée d'une partie de la feuille de renforcement (314) et qui est fusionnée pour lier la feuille d'électrode (12) et la feuille de renforcement (314) l'une à l'autre.

10. Transducteur électrostatique selon la revendication 9,
dans lequel la troisième portion de liaison (44a) lie la feuille d'électrode (12) et la feuille de renforcement (314) l'une à l'autre par liaison par ultrasons.

11. Transducteur électrostatique selon l'une quelconque des revendications 1 à 8, comprenant en outre :
une feuille de renforcement (314) faite de métal qui présente au moins une surface avant formée d'un matériau métallique et disposée pour faire face à la feuille d'électrode (12), avec au moins la portion conductrice (311) interposée entre la feuille d'électrode (12) et la feuille de renforcement (314) ; et
une quatrième portion de liaison (44a) qui lie la feuille d'électrode (12) et la feuille de renforcement (314) l'une à l'autre par liaison par ultrasons.

12. Transducteur électrostatique selon la revendication 11,
dans lequel la quatrième portion de liaison (44a) lie la feuille d'électrode (12) et la feuille de renforcement (314) l'une à l'autre par liaison par ultrasons et lie le fil central de la portion conductrice (311) et la feuille de renforcement (314) l'un à l'autre par liaison par ultrasons.

13. Transducteur électrostatique selon la revendication 11 ou 12,
dans lequel la feuille de renforcement (314) est un tissu conducteur.

14. Procédé de fabrication d'un transducteur électrostatique, qui fabrique le transducteur électrostatique selon la revendication 3 et comprend :
la disposition de la portion conductrice (311) et de la première portion de revêtement (312) sur la feuille d'électrode (12) ;
la liaison de la feuille d'électrode (12) et de la première portion de revêtement (312) l'une à l'autre par liaison par ultrasons ;
la disposition de la portion conductrice (311) et de la première portion de revêtement (312) sur la feuille d'électrode (12) ; et
la liaison de la feuille d'électrode (12) et du fil central (311a) de la portion conductrice (311) l'un à l'autre par liaison par ultrasons, et la liaison de la feuille d'électrode (12) et de la première portion de revêtement (312) l'une à l'autre par liaison par ultrasons.
